# EUROPÄISCHE PATENTSCHRIFT

(11) **EP 1 552 971 B1**
(45) Veröffentlichungstag und Bekanntmachung des Hinweises auf die Patenterteilung: **14.02.2007**
(21) Anmeldenummer: 04290057.1
(22) Anmeldetag: 08.01.2004
(51) Int. Cl.: B60H 1/00

(54) **Heizungs-, Belüftungs- oder Klimaanlage mit einer Luftführungsvorrichtung**
Heating, ventilating or cooling device with an air guiding arrangement
Appareil de chauffage, ventilation ou climatisation muni d'un dispositif de guidage d'air

(43) Veröffentlichungstag der Anmeldung: 13.07.2005
(73) Patentinhaber: Behr France Rouffach SAS, 68250 Rouffach (FR)
(72) Erfinder: Schlachter, Claude, 6840 Wolschwiller (FR)
(74) Vertreter: Grauel, Andreas

(56) Entgegenhaltungen:
- EP-A- 1 228 907
- FR-A- 2 789 018
- US-B1- 6 178 764

## Beschreibung

Die Erfindung betrifft eine Heizungs-, Belüftungs- oder Klimaanlage mit einer Luftführungsvorrichtung, insbesondere eine Kraftfahrzeug-Heizungs-, Belüftungs- oder Klimaanlage, gemäß dem Oberbegriff des Anspruchs 1.

Dokument US 6 178 764 B, das als nächstliegender Stand der Technik gilt, offenbart eine derartige Heizungs, Belüftungs- oder Klimaanlage.

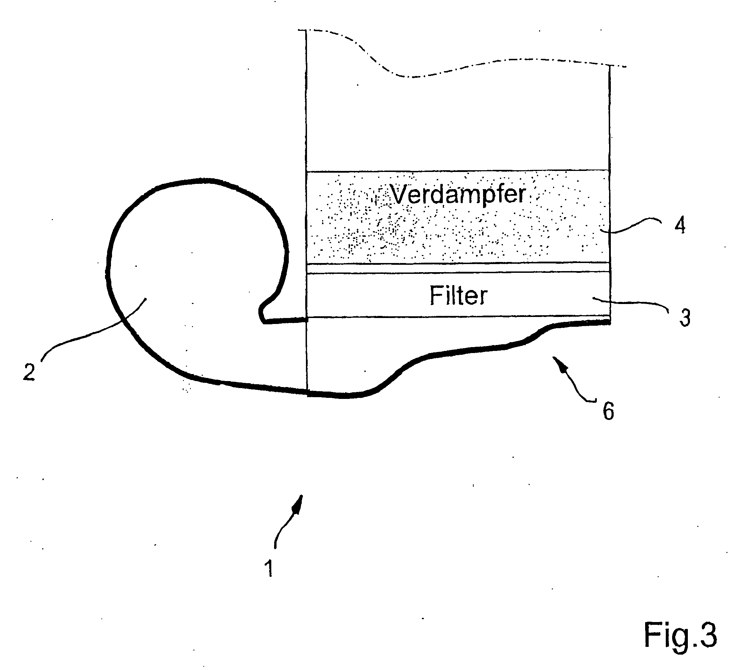

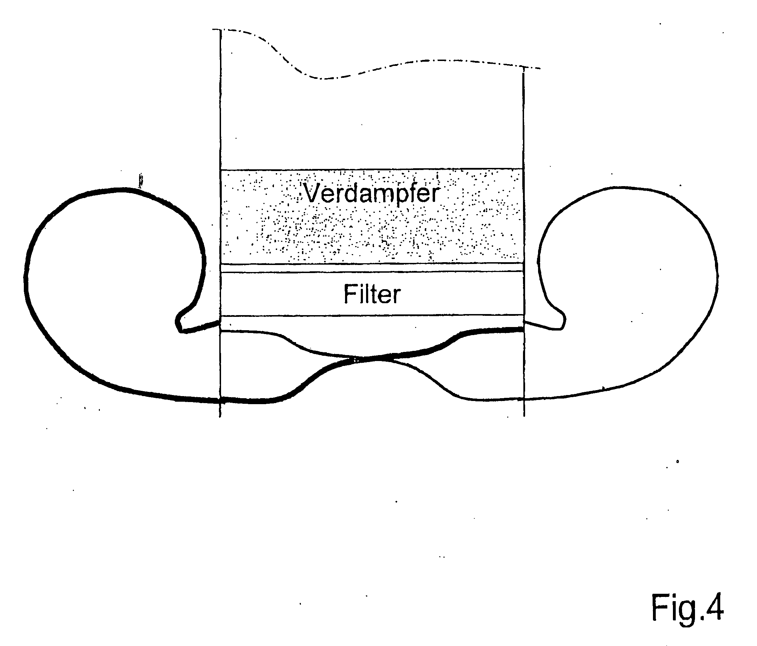

Herkömmlicherweise werden, wie in den Figuren 3 und 4 dargestellt, bei asymmetrisch ausgebildeten Luftführungsgehäusen 1, d.h. bei Verwendung spiegelbildlich aufgebauter Luftführungsgehäuse 1, zum Beispiel für links- und rechtsgelenkte Kraftfahrzeuge, unterschiedliche Bauteile verwendet. So ist in Fig. 3 ein Luftführungsgehäuse 1 einer Kraftfahrzeug-Klimaanlage mit Gebläse 2, Filter 3 und Verdampfer 4 für ein links gelenktes Kraftfahrzeug dargestellt. Im Umlenkbereich der Luftströmung nach dem Gebläse 2 und vor dem Filter 3 ist zur Optimierung der Luftverteilung über die gesamte Filterfläche am Luftführungsgehäuse 1 ein entsprechend strömungstechnisch optimiertes Profil ausgebildet, auf welches im Folgenden als Luftführungsvorrichtung Bezug genommen wird. Auf Grund der unterschiedlichen Ausgestaltung der Luftführungsgehäuse 1 für links- und rechtsgelenkte Kraftfahrzeuge ist auch die jeweilige Luftführungsvorrichtung unterschiedlich ausgebildet.

Dies führt zu erheblichen Mehrkosten, da unter anderem Werkzeuge für relativ große Teile vorhanden sein müssen und diese jeweils für Rechts- bzw. Linkslenker zur Verfügung sein müssen.

Es ist Aufgabe der Erfindung, eine verbesserte, kostengünstigere Heizungs-, Belüftungs- oder Klimaanlage zur Verfügung zu stellen.

Diese Aufgabe wird gelöst durch eine Heizungs-, Belüftungs- oder Klimaanlage mit den Merkmalen des Anspruchs 1. Vorteilhafte Ausgestaltungen sind Gegenstand der Unteransprüche.

Erfindungsgemäß ist eine Heizungs-, Belüftungs- oder Klimaanlage mit einem Luftführungsgehäuse und mit einer Luftführungsvorrichtung, vorgesehen, an dem ein Gebläse angeordnet ist, wobei die Luftführungsvorrichtung getrennt vom Luftführungsgehäuse ausgebildet und durch eine Gehäuseöffnung in das Luftführungsgehäuse eingeschoben ist, welche einer entsprechend ausgebildeten Gehäuseöffnung gegenüberliegt, bei der das Gebläse angebracht ist. Dies ermöglicht eine identische Ausgestaltung der Luftführungsgehäuse für links- und rechtsgelenkte Kraftfahrzeuge, so dass die Werkstückkosten verringert und auch die erforderliche Logistik vereinfacht werden kann.

Die Luftführungsvorrichtung ist vorzugsweise durch einen Filterdeckel gebildet, wobei die Luftführungsvorrichtung eine gleichmäßige Luftverteilung auf den nachfolgend angeordneten Filter bewirkt.

Das Luftführungsgehäuse und die Luftführungsvorrichtung weisen bevorzugt die gleichen Befestigungsvorrichtungen auf, wie für ein Gebläse des andersseitig gelenkten Kraftfahrzeug-Typs. Dadurch können die am Luftführungsgehäuse vorgesehen Befestigungsvorrichtungen sowohl für das Gebläse als auch für die Luftführungsvorrichtung verwendet werden, je nach Bedarf, und es sind keine zusätzlichen Befestigungsvorrichtungen erforderlich, so dass das gleiche (auch in Hinblick auf mögliche Bearbeitungsvorgänge, die dem Spritzgießen folgen) Luftführungsgehäuse für links- und rechtsgelenkte Kraftfahrzeuge verwendet werden kann.

Die Luftführungsvorrichtung ist bevorzugt spiegelbildlich bezüglich der Mittelebene ausgebildet, so dass nicht nur das gleiche Luftführungsgehäuse sondern auch die gleiche Luftführungsvorrichtung für links- und rechtsgelenkte Kraftfahrzeuge verwendet werden kann. Dabei weist die Luftführungsvorrichtung vorzugsweise über die gesamte Breite im Luftführungsbereich das gleiche Profil auf.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische, geschnittene Darstellung einer erfindungsgemäßen Luftführungsvorrichtung für ein linksgelenktes Kraftfahrzeug,
- Fig. 2: eine schematische, geschnittene Darstellung einer erfindungsgemäßen Luftführungsvorrichtung für ein rechtsgelenktes Kraftfahrzeug,
- Fig. 3: eine schematische, geschnittene Darstellung einer herkömmlichen Luftführungsvorrichtung für ein linksgelenktes Kraftfahrzeug, und
- Fig. 4: eine schematische, geschnittene Darstellung herkömmlichen Luftführungsvorrichtungen für ein links- und ein rechtsgelenktes Kraftfahrzeug in einer gemeinsamen Darstellung, wobei die Luftführungsvorrichtung für das rechtsgelenkte Kraftfahrzeug mit dünneren Linien dargestellt ist.

Ein Luftführungsgehäuse 1, das auf Grund einer entsprechend ausgestalteten Luftführungsvorrichtung, auf die an späterer Stelle näher eingegangen wird, für links- und rechtsgelenkte Kraftfahrzeuge, verwendet werden kann, ist derart ausgebildet, dass am Luftführungsgehäuse 1 ein Gebläse 2 wahlweise, d.h. je nach Anordnung der Lenkung, links oder rechts angeflanscht werden kann. Hierfür sind im Luftführungsgehäuse 1 einander gegenüberliegende Gehäuseöffnungen vorgesehen. Dem Geläse 2 nachfolgend angeordnet ist ein Filter 3 und ein oder mehrere Wärmetauscher, vorliegend ein Verdampfer 4 und ein Heizer (nicht dargestellt), zur Klimatisierung der durchströmenden Luft vorgesehen.

Im Umlenkbereich der Luftströmung nach dem Gebläse 2 und vor dem zur Filterung der Luft angeordneten Filter 3 ist zur Optimierung der Luftverteilung über die gesamte Filterfläche und somit zur möglichst gleichmäßigen Ausnutzung des Filters 3, wie auch zur gleichmäßigen Luftverteilung über den nachfolgenden Wärmetauscher, ein seitlich durch die dem Gebläse 2 gegenüberliegende Gehäuseöffnung ein mit einem entsprechend strömungstechnisch optimierten Profil versehener Filterdeckel 5 eingeschoben, welcher die Luftführungsvorrichtung 6 bildet.

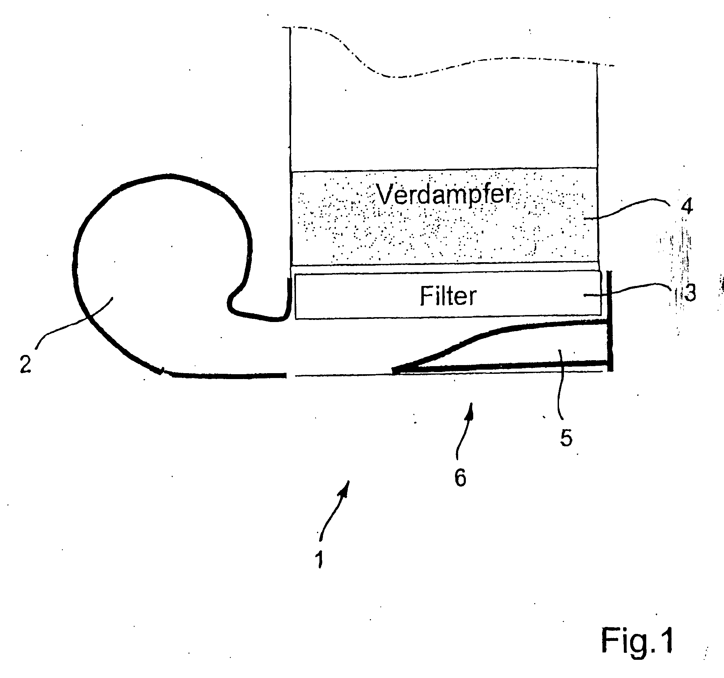

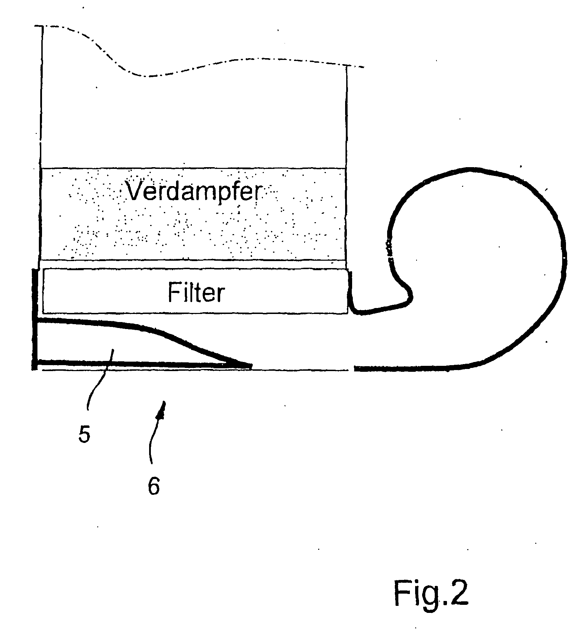

Der Filterdeckel 5 ist für seine Befestigung am Luftführungsgehäuse 1 entsprechend dem Gebläse 2 für die spiegelbildlich ausgebildete Variante ausgebildet, so dass keine zusätzlichen Vorrichtungen zur Befestigung am Luftführungsgehäuse 1 erforderlich sind, sondern das gleiche Luftführungsgehäuse 1 für beide Anordnungen der Lenkung verwendet werden kann. Ebenfalls ist bei der vorliegenden Symmetrie der Filterdeckel 5 für beide Anordnungen der Lenkung verwendbar, so dass links- und rechtsgelenkte Kraftfahrzeuge mit den gleichen Elementen ausgestattet werden können, wobei sich nur die Anordnung von Gebläse 2 und Filterdeckel 5 unterscheidet. Vorliegend hat der Filterdeckel 5 über seine gesamte Breite, d.h. in Blickrichtung von Fig. 1 bzw. 2 das gleiche Profil im Luftführungsbereich.

### Bezugszeichenliste

- 1: Luftführungsgehäuse
- 2: Gebläse
- 3: Filter
- 4: Verdampfer
- 5: Filterdeckel
- 6: Luftführungsvorrichtung

## Patentansprüche

1. Heizungs-, Belüftungs- oder Klimaanlage mit einem Gebläse, gegebenenfalls einem Heizkörper und gegebenenfalls einem Verdampfer, mit einem Luftführungsgehäuse und mit einer Luftführungsvorrichtung, an dem ein Gebläse angeordnet ist, wobei die Luftführungsvorrichtung getrennt vom Luftführungsgehäuse ausgebildet ist, wobei sie durch eine Gehäuseöffnung in das Luftführungsgehäuse eingeschoben ist, **dadurch gekennzeichnet, dass** die Gehäuseöffnung einer weiteren Gehäuseöffnung gegenüberliegt, bei der das Gebläse angebracht ist.

2. Heizungs-, Belüftungs- oder Klimaanlage nach Anspruch 1, **dadurch gekennzeichnet, dass** die Luftführungsvorrichtung durch einen Filterdeckel gebildet ist oder als Filterdeckel ausgebildet ist.

3. Heizungs-, Belüftungs- oder Klimaanlage nach Anspruch 1 oder 2, **dadurch gekennzeichnet, dass** der Luftführungsvorrichtung in Luftströmungsrichtung gesehen nachgeordnet ein Filter angeordnet ist.

4. Heizungs-, Belüftungs- oder Klimaanlage nach einem der vorhergehenden Ansprüche, **dadurch gekennzeichnet, daß** das Luftführungsgehäuse zumindest zwei gegenüberliegende Öffnungen aufweist, zur Aufnahme der Luftführungsvorrichtung bzw. zur Befestigung des Gebläses.

5. Heizungs-, Belüftungs- oder Klimaanlage nach einem der vorhergehenden Ansprüche, **dadurch gekennzeichnet, dass** das Luftführungsgehäuse und die Luftführungsvorrichtung die gleichen Befestigungsvorrichtungen aufweist wie für ein Gebläse des beispielsweise andersseitig gelenkten Kraftfahrzeug-Typs.

6. Heizungs-, Belüftungs- oder Klimaanlage nach einem der vorhergehenden Ansprüche, **dadurch gekennzeichnet, dass** das Luftführungsgehäuse oder die Luftführungsvorrichtung spiegelbildlich bezüglich der Mittelebene ausgebildet ist.

7. Heizungs-, Belüftungs- oder Klimaanlage nach einem der vorhergehenden Ansprüche, **dadurch gekennzeichnet, dass** die Luftführungsvorrichtung über die gesamte Breite im Luftführungsbereich das gleiche Profil aufweist.

## Claims

1. A heating, ventilating or cooling device having a fan, where appropriate a heating element and where appropriate an evaporator, having an air guiding housing and an air guiding arrangement on which is positioned a fan, the air guiding arrangement being configured separately from the air guiding housing, it being inserted through a housing opening into the air guiding housing,
**characterised in that**
said housing opening lies opposite a further housing opening in which the fan is fitted.

2. A heating, ventilating or cooling device in accordance with claim 1,
**characterised in that**
the air guiding arrangement takes the form of a filter lid or is designed as a filter lid.

3. A heating, ventilating or cooling device in accordance with claim 1 or 2,
**characterised in that**
a filter is positioned downstream of the air guiding device in the direction of the air flow.

4. A heating, ventilating or cooling device in accordance with one of the preceding claims,
**characterised in that**
the air guiding housing has at least two opposite openings for receiving the air guiding arrangement and for mounting the fan.

5. A heating, ventilating or cooling device in accordance with one of the preceding claims,
**characterised in that**
the air guiding housing and the air guiding arrangement have the same mounting devices as a fan in the motor vehicle type steered on the other side, for example.

6. A heating, ventilating or cooling device in accordance with one of the preceding claims,
**characterised in that**
the air guiding housing or the air guiding arrangement is designed mirror symmetrically in respect of the centre plane.

7. A heating, ventilating or cooling device in accordance with one of the preceding claims,
**characterised in that**
in the air guiding area the air guiding arrangement has the same profile over its entire width.

## Revendications

1. Appareil de chauffage, ventilation ou climatisation muni d'une soufflerie, le cas échéant d'un corps de chauffe et le cas échéant d'un évaporateur, d'un boîtier de guidage d'air et d'un dispositif de guidage d'air, au niveau duquel est disposée une soufflerie, le dispositif de guidage d'air étant séparé du boîtier de guidage d'air, ce dispositif étant inséré dans le boîtier de guidage d'air à travers une ouverture de boîtier, **caractérisé en ce que** l'ouverture de boîtier est située en face d'une autre ouverture de boîtier, au niveau de laquelle est placée la soufflerie.

2. Appareil de chauffage, ventilation ou climatisation selon la revendication 1, **caractérisé en ce que** le dispositif de guidage d'air est formé par un couvercle de filtre ou est conçu comme couvercle de filtre.

3. Appareil de chauffage, ventilation ou climatisation selon la revendication 1 ou 2, **caractérisé en ce qu'**un filtre est placé, vu dans le sens d'écoulement de l'air, en amont du dispositif de guidage d'air.

4. Appareil de chauffage, ventilation ou climatisation selon l'une quelconque des revendications précédentes, **caractérisé en ce que** le boîtier de guidage d'air présente au moins deux ouvertures opposées en vue de recevoir le dispositif de guidage d'air et/ou de fixer la soufflerie.

5. Appareil de chauffage, ventilation ou climatisation selon l'une quelconque des revendications précédentes, **caractérisé en ce que** le boîtier de guidage d'air et le dispositif de guidage d'air présentent les mêmes dispositifs de fixation comme pour une soufflerie du véhicule automobile type dirigé par exemple autrement.

6. Appareil de chauffage, ventilation ou climatisation selon l'une quelconque des revendications précédentes, **caractérisé en ce que** le boîtier de guidage d'air ou le dispositif de guidage d'air est conçu de façon inversée par rapport au plan médian.

7. Appareil de chauffage, ventilation ou climatisation selon l'une quelconque des revendications précédentes, **caractérisé en ce que** le dispositif de guidage d'air présente le même profil sur toute la largeur dans la zone de guidage d'air.
